# FASCICULE DE BREVET EUROPEEN

(11) **EP 0 465 381 B1**
(45) Date de publication et mention de la délivrance du brevet: **03.05.1995**
(21) Numéro de dépôt: 91420200.7
(22) Date de dépôt: 18.06.1991
(51) Int. Cl.: H02P 7/288

(54) **Dispositif de commande de la vitesse de rotation de moteur électrique**
Regelvorrichtung für die Rotationsgeschwindigkeit eines elektrischen Motors
Device for controlling the rotation speed of an electric motor

(30) Priorité: 22.06.1990 IT 6745790
(43) Date de publication de la demande: 08.01.1992
(73) Titulaire: HOSPAL AG, 4008 Basel (CH)
(72) Inventeur: Audemard, Gilles, I-41037 Mirandola (MO) (IT)

(56) Documents cités:
- EP-A- 0 118 783
- DE-A- 3 005 154
- DE-U- 8 806 823
- US-A- 4 271 383
- US-A- 4 280 104
- US-A- 4 384 241

## Description

La présente invention concerne un dispositif de commande de la vitesse de rotation de moteur électrique, et notamment de moteur à courant continu, moteur pas-à-pas et moteur sans balais (brushless).

Divers types de dispositif de commande sont actuellement utilisés pour la commande de la vitesse de rotation des moteurs électriques. Par exemple, pour les moteurs à courant continu, on utilise fréquemment des dispositifs qui reçoivent comme signal d'entrée un signal correspondant à la vitesse désirée et qui délivrent en sortie un signal à rapport cyclique variable (PWM), qui est filtré et envoyé au circuit de commande du moteur. Dans la pratique, le signal de commande produit par ces dispositifs est constitué par une série d'impulsions, dont chacune présente un front initial (un front montant, par exemple) se produisant à un instant déterminé par la fréquence de travail fixée préalablement, et un front final (un front descendant, par exemple) suivant le front initial après une durée variable, l'impulsion présentant une largeur ou durée qui peut être réglée entre un minimum (égal à zéro, correspondant à vitesse nulle) et un maximum (égal à l'inverse de la fréquence fixe de travail, correspondant à la vitesse maximale du moteur alimenté sans interruption). Par conséquent, le signal de commande est essentiellement un signal analogique de fréquence fixe, étant donné que l'information de vitesse est codée dans la largeur variable des impulsions.

Ce type de dispositif présente l'inconvénient d'exiger, pour sa mise en oeuvre, des moyens de technologie assez pointue, donc coûteux.

Il est également connu, pour commander la vitesse de rotation des moteurs électriques, d'utiliser des dispositifs délivrant un signal modulé en amplitude. Bien qu'avantageux en ce qui concerne le filtrage (le signal de fréquence fixe peut être filtré facilement), ce type de dispositif présente des inconvénients lorsque le signal de commande doit passer par une ligne de transmission, dans la mesure où, étant analogique, ce signal est sensible aux distorsions engendrées par la ligne elle-même. Par ailleurs, ce dispositif ne convient pas à la commande d'autres types de moteur, tels que les moteurs pas-à-pas.

Un but de la présente invention est donc de réaliser un dispositif de commande de la vitesse de rotation de moteurs électriques qui permette de remédier aux inconvénients des systèmes connus, et, en particulier, qui soit sensiblement indépendant des distorsions de ligne et puisse être utilisé, moyennant des modifications mineures, sur divers types de moteurs.

Pour atteindre ce but, on prévoit, selon l'invention, un circuit pour commander la vitesse de rotation d'un moteur électrique à courant continu comprenant :
- des moyens pour engendrer un premier signal S₁ ayant des impulsions ayant une fréquence variable correspondant à une vitesse de rotation désirée du moteur;
- des moyens pour transformer le premier signal S₁ en un second signal S₂ ayant des impulsions ayant la fréquence du premier signal S₁ et une durée constante prédéterminée ; et
- des moyens pour alimenter le moteur avec un voltage pulsatif ayant une fréquence et une durée d'impulsion sensiblement égales à la fréquence et à la durée d'impulsion du second signal S₂.

Selon une caractéristique de l'invention, les moyens pour engendrer le premier signal S₁ comprennent des moyens, tel qu'un oscillateur à signal de sortie à ondes carrées, pour engendrer un signal originel S₀ ayant des impulsions ayant une fréquence constante, et des moyens pour diviser la fréquence constante par un diviseur correspondant à une vitesse de rotation désirée du moteur.

Selon une autre caractéristique de l'invention, les moyens pour transformer le premier signal S₁ en le second signal S₂ comprennent un circuit monostable.

Selon l'invention, on prévoit aussi un procédé pour commander la vitesse de rotation d'un moteur électrique à courant continu comprenant les étapes de :
- engendrer un premier signal S₁ ayant des impulsions ayant une fréquence variable correspondant à une vitesse de rotation désirée du moteur ;
- transformer le premier signal S₁ en un second signal S₂ ayant des impulsions ayant la fréquence du premier signal et une durée constante prédéterminée ; et
- alimenter le moteur avec un voltage pulsatif ayant une fréquence et une durée d'impulsion sensiblement égales à la fréquence et à la durée d'impulsion du second signal S₂.

Selon une caractéristique de l'invention, I'étape d'engendrer un premier signal S₁ comprend l'étape d'engendrer un signal original S₀ ayant des impulsions ayant une fréquence et une durée constantes, et l'étape de diviser la fréquence constante par un diviseur correspondant à la vitesse de rotation désirée du moteur.

Pour une meilleure compréhension de l'invention, deux formes de réalisation sont décrites, uniquement à titre d'exemple. On se reportera aux dessins annexés sur lesquels :
la figure 1 est un schéma bloc du dispositif selon l'invention ;
la figure 2 est un diagramme représentant l'évolution dans le temps de certains signaux du schéma de la figure 1 ;
la figure 3 est un schéma général du circuit d'un premier mode de réalisation de l'unité de commande de moteur représentée sur la figure 1 ;
la figure 4 est un diagramme représentant les caractéristiques couple/vitesse pouvant être obtenues avec l'unité de commande représentée sur la figure 3 ;
la figure 5 est un schéma général du circuit d'un second mode de réalisation de l'unité de commande de moteur représentée sur la figure 1 ; et
la figure 6 est un diagramme représentant les caractéristiques couple/vitesse pouvant être obtenues avec l'unité de commande représentée sur la figure 5.

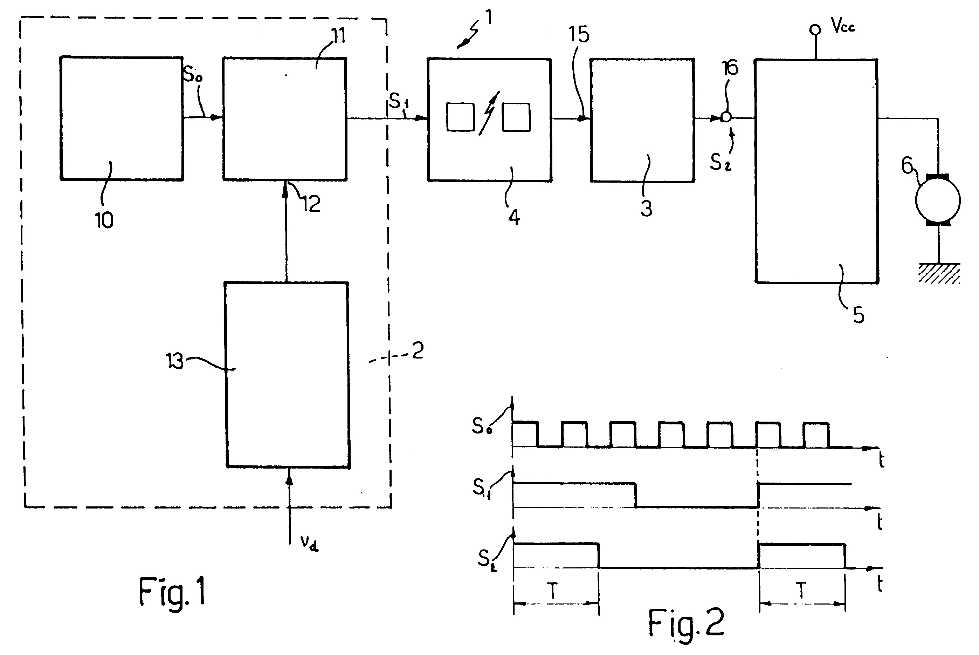

En se reportant à la figure 1, on voit que le dispositif de commande selon l'invention, repéré dans son ensemble par le chiffre 1, comporte essentiellement un générateur de fréquence variable 2 qui délivre un signal S₁, dont la fréquence peut être réglée en fonction de la vitesse de rotation désirée ; des moyens de démodulation, tel qu'un circuit monostable 3, qui reçoit le signal S₁ et délivre en sortie un signal de commande S₂ de durée pré-établie et de fréquence égale à celle de S₁, un organe d'opto-isolation 4 pouvant être intercalé entre le générateur de fréquence 2 et le circuit monostable 3 ; et une unité de commande 5 d'un moteur 6, qui commande l'alimentation de ce moteur en fonction du signal de commande S₂.

Le générateur 2 comporte un oscillateur 10 qui délivre un signal de sortie S₀ à onde carrée (à la fréquence de 10 MHz par exemple) et dont la sortie est reliée à un opérateur de division 11 programmable prévu pour diviser la fréquence du signal S₀ délivré par l'oscillateur par la valeur (diviseur) spécifiée à son entrée de commande 12 par un générateur de diviseur 13. Le générateur de diviseur 13 est lui-même commandé par un signal de commande V_{d} correspondant à la vitesse désirée pour le moteur (vitesse fixée, par exemple, par un opérateur par l'intermédiaire d'un clavier ou autre organe similaire). Le générateur de diviseur 13 délivre ainsi un signal de sortie indiquant la valeur par laquelle la fréquence produite par l'oscillateur 10 doit être divisée (c'est-à-dire le diviseur) en fonction de la vitesse désirée. Le signal S₁ (voir figure 2, sur laquelle, pour des raisons de clarté, la fréquence est divisée par cinq, ce qui est très inférieur aux valeurs réellement utilisées), présente donc une forme d'onde carrée dont la fréquence varie proportionnellement à la vitesse de rotation désirée du moteur 6. Typiquement, la fréquence de S₁ peut varier de 0 à 20 KHz, ce qui correspond respectivement à l'absence d'alimentation et une vitesse nulle du moteur et à une alimentation continue et la vitesse maximale du moteur (dans ce dernier cas la division est par 500 par exemple).

Le signal S₁, fourni à une entrée 15 du circuit monostable 3, provoque la délivrance, par ce dernier, d'une séquence d'impulsions dont la fréquence est égale à la fréquence variable du signal S₁ (et varie donc de 0 à 20 KHz) et dont la durée "T" est fixée par le circuit monostable lui-même. La durée pré-établie des impulsions délivrées par le circuit monostable 3 est choisie pour être égale à la période correspondant à la fréquence maximale produite par l'opérateur de division 11, c'est à dire 50 »sec dans l'exemple précité. Dans la pratique, le signal de commande S₂ fourni à l'entrée 16 de l'unité de commande 5 a un rapport cyclique opératoire variable de 0 (lorsque S₁ a une fréquence nulle et que le circuit monostable ne délivre aucune impulsion de sortie) à 100% (lorsque S₁ a une fréquence maximale égale à 20 KHz et que le circuit monostable 3 délivre un signal de sortie continu). Le signal S₂, de type numérique, peut donc être utilisé directement pour la commande de moteurs de types différents, par l'intermédiaire de l'unité de commande 5.

Cette unité assure l'alimentation du moteur 6 en le connectant à l'alimentation V_{CC} aussi longtemps qu'une impulsion du signal de commande S₂ est présente à l'entrée 16. Par conséquent, plus la fréquence du signal de commande est élevée, plus longtemps le moteur est alimenté et plus il tourne vite. A la limite, lorsque le rapport cyclique du signal de commande S₂ est égal à 100% (le signal de commande est alors une impulsion continue unique), le moteur est alimenté sans interruption et tourne à sa vitesse maximale.

Conformément à l'invention, il est possible, avec le signal de commande S₂, de commander directement des unités de commande construites différemment, selon la nature de la commande désirée. Par exemple, il est possible de commander des moteurs de types différents (courant continu, pas-à-pas ou sans balais), avec ou sans action de freinage et avec commande dans le premier, second ou troisième quadran.

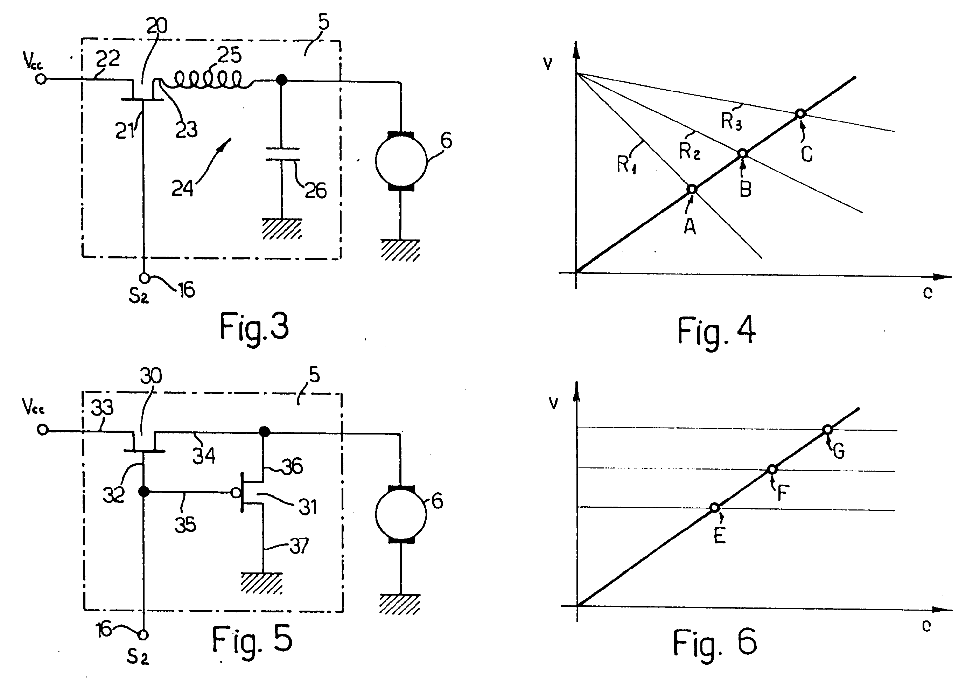

La figure 3 représente un exemple de réalisation de l'unité de commande 5 dans le cas d'un moteur à courant continu et d'un actionnement dans le premier quadrant sans freinage. Dans ce mode de réalisation, I'unité 5 comporte un interrupteur de puissance 20 commandé, par exemple un transistor de puissance MOSFET, ayant une borne de commande 21 reliée à l'entrée 16 et recevant ainsi le signal de commande S₂, une borne 22 reliée à la tension d'alimentation V_{CC} et une borne 23 reliée à un filtre LC 24 comportant une inductance 25 et un condensateur 26. La première borne de l'inductance 25 est reliée à la borne 23 de l'interrupteur de puissance 20 commandé, et son autre borne est reliée au moteur 6, tandis que le condensateur 26 a une première borne reliée au point de connexion entre l'inductance 25 et le moteur 6, et son autre borne reliée à la terre, définissant une ligne de potentiel de référence.

Le fonctionnement du circuit de la figure 3 est le suivant : chaque fois que l'interrupteur 20 reçoit une impulsion délivrée par le circuit monostable 3 à sa borne de commande 21, il se ferme et connecte le moteur 6 à l'alimentation V_{CC}, par l'intermédiaire du filtre 24. A la fin de l'impulsion, l'interrupteur 20 s'ouvre et coupe l'alimentation du moteur. Par conséquent, en fonction de la fréquence (et donc du cycle opératoire) du signal S₂ produit par le circuit monostable 3, le moteur est alimenté à une fréquence plus ou moins élevée, et sa vitesse de rotation est donc plus ou moins élevée.

Avec le circuit représenté sur la figure 3, il est possible d'obtenir diverses valeurs de couple, selon la charge résistive R1, R2, R3 du moteur, comme cela est illustré sur le diagramme de la figure 4, où le couple c figure en abscisse et la vitesse v de rotation du moteur en ordonnée. Comme on peut le voir, divers points de travail (A, B, C) peuvent être obtenus, avec les valeurs de couple/vitesse correspondantes, en fonction du couple exigé du moteur.

La figure 5 illustre un autre mode de réalisation de l'unité de commande 5. Ici, I'unité 5 commande dans le premier quadrant avec une action de freinage. Pour plus de détail, I'unité de commande 5 de la figure 5 comporte un premier interrupteur de puissance commandé 30 d'alimentation, et un deuxième interrupteur de puissance commandé 31 de freinage, qui travaille en opposition de phase par rapport à l'interrupteur 30. L'interrupteur 30, constitué à nouveau par un transistor de puissance MOSFET, est similaire à l'interrupteur 20 et il a donc une borne de commande 32 reliée à l'entrée 16 qui reçoit donc le signal de commande S₂, une borne 33 reliée à la tension d'alimentation V_{CC} et une borne 34 reliée au moteur 6 (dans ce cas cependant aucun filtre n'est prévu). L'interrupteur 31, qui fonctionne en opposition de phase par rapport à l'interrupteur 30, comme indiqué symboliquement sur la figure 5 par le cercle sur sa borne de commande 35, est relié par cette borne de commande 35 à l'entrée 16 de l'unité de commande 5 et il reçoit donc aussi le signal de commande S₂. L'interrupteur 31 a aussi une borne 36 reliée à la borne 34 de l'interrupteur 30 (et au moteur 6), et une autre borne 37 reliée à la terre.

Le fonctionnement du circuit de la figure 5 est le suivant : en présence d'une impulsion du signal S₂, l'interrupteur 30 se ferme et relie le moteur 6 à la tension d'alimentation Vcc, comme dans le circuit de la figure 3. Dans cette phase, l'interrupteur 31, qui est en opposition de phase par rapport à l'interrupteur 30, est ouvert et il ne joue aucun rôle. A la fin de l'impulsion du signal S₂, l'interrupteur 30 s'ouvre et isole le moteur 6 de l'alimentation Vcc, et l'interrupteur 31 se ferme et relie le moteur 6 à la terre, ce qui produit un effet de freinage. Dans ce cas également, étant donné que les temps d'ouverture et de fermeture des interrupteurs 30 et 31 dépendent de la fréquence (et donc du cycle opératoire) du signal de commande S₂, la vitesse de rotation du moteur est plus ou moins élevée en fonction de la valeur de cette fréquence.

Les caractéristiques couple/vitesse indiquées sur la figure 6 sont donc obtenues, cette figure étant similaire à la figure 4, où le couple c est indiqué en abscisse et la vitesse v en ordonnée. Dans ce cas, pour une vitesse donnée, il est possible d'obtenir une seule valeur de couple (sur cette figure les points de travail obtenus sont indiqués par E, F, G.).

Grâce à cette invention, il est donc possible de régler la vitesse de rotation d'un moteur grâce à un dispositif insensible aux distorsions de ligne. En effet, dans le dispositif selon l'invention, à la différence de ce qui se passe dans les dispositifs connus, le signal envoyé à l'unité de commande est de type numérique puisque le codage de la vitesse désirée est obtenue par une modulation de fréquence, la durée des impulsions étant fixe (telle qu'établie par le monostable 3). Par conséquent, la conversion numérique-analogique est effectuée uniquement dans l'unité de commande et le signal de commande peut passer sur une ligne de transmission sans perte d'information codée.

Le dispositif selon la présente invention est avantageux à cause de la simplicité de son circuit et parce qu'il peut être utilisé avec des moteurs de types différents et peut être adapté facilement à divers types de commande, comme indiqué sur les figures 3 à 6.

Ce dispositif permet une commande précise de la vitesse du moteur. Si cela est nécessaire, un organe opto-isolant 4 (requis dans certaines applications, pour des raisons de sécurité par exemple) peut être introduit pour séparer les composants produisant le signal de fréquence variable S₁ (partie de modulation de fréquence comportant le générateur de fréquence variable 2) de la partie produisant le signal de commande (partie de démodulation comportant le circuit monostable 3), sans provoquer de distorsion de signal.

L'invention n'est pas limitée aux modes de réalisation qui viennent d'être décrits et elle est susceptible de modifications et de variantes dans le cadre de la protection conférée par les revendications. En particulier, il faut souligner que le générateur de fréquence variable peut être réalisé également au moyen d'autres types de modulateurs de fréquence, ou bien qu'il peut être constitué par un microprocesseur programmé pour délivrer le signal de fréquence variable en fonction de la vitesse désirée fournie de l'extérieur, ou en fonction des nécessités opérationnelles préalablement programmées ou définies à un instant donné. En particulier, dans le cas où un microprocesseur est utilisé, celui-ci peut recevoir en entrée un signal supplémentaire correspondant à la vitesse de rotation réelle du moteur 6, obtenu par exemple au moyen d'un encodeur, et compenser des erreurs éventuelles de la vitesse de rotation, formant ainsi un système de réglage en circuit fermé.

Les moyens de démodulation peuvent être de plusieurs types. Par exemple, à la place d'un générateur d'impulsions monostable 3, il est possible de prévoir une boucle à verrouillage de phase (circuit PLL).

Les interrupteurs de puissance commandés peuvent aussi être de tout type approprié aux besoins spécifiques. En particulier, dans le mode de réalisation représenté sur la figure 5, les deux interrupteurs peuvent être soit de type opposé, de façon à avoir automatiquement un fonctionnement en opposition de phase, soit de même type, un inverseur pouvant être prévu entre l'entrée 16 de l'unité de commande 5 et l'une des bornes commandées.

## Revendications

1. Circuit pour commander la vitesse de rotation d'un moteur électrique (6) à courant continu, caractérisé en ce qu'il comprend :
- des moyens (2) pour engendrer un premier signal S₁ ayant des impulsions ayant une fréquence variable correspondant à une vitesse de rotation désirée du moteur (6);
- des moyens (3) pour transformer le premier signal S₁ en un second signal S₂ ayant des impulsions ayant la fréquence du premier signal S₁ et une durée constante prédéterminée ; et
- des moyens (5) pour alimenter le moteur (6) avec un voltage pulsatif ayant une fréquence et une durée d'impulsion sensiblement égales à la fréquence et à la durée d'impulsion du second signal S₂.

2. Circuit selon la revendication 1, caractérisé en ce que les moyens (2) pour engendrer le premier signal S₁ comprennent des moyens (10) pour engendrer un signal originel S₀ ayant des impulsions ayant une fréquence constante, et des moyens (13) pour diviser la fréquence constante par un diviseur correspondant à une vitesse de rotation désirée du moteur (6).

3. Circuit selon la revendication 2, caractérisé en ce que les moyens pour engendrer le signal originel S₀ comprennent un oscilateur (10) pour engendrer un signal à ondes carrées.

4. Circuit selon une des revendications 1 à 3, caractérisé en ce que les moyens pour transformer le premier signal S₁ en le second signal S₂ comprennent un circuit monostable (3).

5. Circuit selon une des revendications 1 à 4, caractérisé en ce qu'il comprend en outre des moyens (4) pour assurer une isolation optique entre les moyens (2) pour engendrer le premier signal S₁ et les moyens (3) pour transformer le premier signal S₁ en le second signal S₂.

6. Circuit selon l'une des revendications 1 à 5, caractérisé en ce que la fréquence du premier signal S₁ est variable entre une valeur inférieure et une valeur supérieure correspondant respectivement à une vitesse minimale et une vitesse maximale du moteur (6).

7. Circuit selon une des revendications 1 à 6, caractérisé en ce que la durée prédéterminée des impulsions du second signal S₂ est sensiblement égale à l'inverse de la valeur supérieure de la fréquence variable du premier signal S₁.

8. Circuit selon une des revendications 1 à 7, caractérisé en ce que les moyens (5) pour alimenter le moteur (6) avec un voltage pulsatif comprennent un interrupteur de puissance commandé (20) ayant une première borne de commande (16) pour recevoir le second signal S₂, une seconde borne (22) connectée à une source de tension continue, et une troisième borne (23) connectée au moteur (6).

9. Circuit selon la revendication 8, caractérisé en ce que les moyens (5) pour alimenter le moteur (6) avec un voltage pulsatif comprennent en outre un filtre LC (24) connecté à la troisième borne (23) de l'interrupteur de puissance commandé (20).

10. Circuit selon une des revendications 1 à 7, caractérisé en ce que les moyens (5) pour alimenter le moteur (6) avec un voltage pulsatif comportent :
- un premier interrupteur de puissance commandé (30) ayant une première borne de commande (32) pour recevoir le second signal S₂, une seconde borne (33) connectée à une source de tension continue, et une troisième borne (34) connectée au moteur (6), et
- un second interrupteur de puissance commandé (31) ayant une première borne de commande (35) pour recevoir le second signal S₂, une seconde borne (36) connectée au moteur (6) et une troisième borne (37) connectée à une ligne de potentiel de référence, le second interrupteur de puissance commandé (31) fonctionnant en opposition de phase par rapport au premier interrupteur de puissance commandé (30).

11. Procédé pour commander la vitesse de rotation d'un moteur (6) électrique à courant continu, caractérisé en ce qu'il comprend les étapes de :
- engendrer un premier signal S₁ ayant des impulsions ayant une fréquence variable correspondant à une vitesse de rotation désirée du moteur (6);
- transformer le premier signal S₁ en un second signal S₂ ayant des impulsions ayant la fréquence du premier signal et une durée constante prédéterminée ; et
- alimenter le moteur (6) avec un voltage pulsatif ayant une fréquence et une durée d'impulsion sensiblement égales à la fréquence et à la durée d'impulsion du second signal S₂.

12. Procédé selon la revendication 11, caractérisé en ce que l'étape d'engendrer un premier signal S₁ comprend l'étape d'engendrer un signal original S₀ ayant des impulsions ayant une fréquence et une durée constantes, et l'étape de diviser la fréquence constante par un diviseur correspondant à la vitesse de rotation désirée du moteur (6).

13. Procédé selon l'une des revendications 11 et 12, caractérisé en ce que la fréquence du premier signal S₁ est variable entre une valeur inférieure et une valeur supérieure correspondant respectivement à une vitesse minimale et à une vitesse maximale du moteur (6).

14. Procédé selon la revendication 13, caractérisé en ce que la durée déterminée des impulsions du second signal S₂ est sensiblement égale à l'inverse de la valeur supérieure de la fréquence variable du premier signal S₁.

## Patentansprüche

1. Schaltkreis zum Steuern der Drehzahl eines elektrischen Gleichstrommotors (6), dadurch gekennzeichnet, daß er umfaßt:
- eine Einrichtung (1) zum Erzeugen eines ersten Signals S₁, das Impulse hat, die eine variable Frequenz entsprechend einer gewünschten Drehzahl des Motors (6) haben;
- eine Einrichtung (3) zum Umwandeln des ersten Signals S₁ in ein zweites Signal S₂, das Impulse mit der Frequenz des ersten Signals S₁ und eine vorbestimmte konstante Dauer hat; und
- eine Einrichtung (5) zum Versorgen des Motors (6) mit einer pulsierenden Spannung, die eine Frequenz und eine Impulsdauer hat, die im wesentlichen gleich der Frequenz und der Impulsdauer des zweiten Signals S₂ ist.

2. Schaltkreis nach Anspruch 1, dadurch gekennzeichnet, daß die Einrichtung (2) zum Erzeugen des ersten Signals S₁ eine Einrichtung (10) zum Erzeugen eines Ursprungssignals S₀ umfaßt, das Impulse hat, die eine konstante Frequenz haben, und eine Einrichtung (13) zum Teilen der konstanten Frequenz durch einen Teiler entsprechend einer gewünschten Drehzahl des Motors (6).

3. Schaltkreis nach Anspruch 2, dadurch gekennzeichnet, daß die Einrichtung zum Erzeugen des Ursprungssignals S₀ einen Oszillator (10) zum Erzeugen eines Rechteckwellensignals umfaßt.

4. Schaltkreis nach einem der Ansprüche 1 bis 3, dadurch gekennzeichnet, daß die Mittel zum Umwandeln des ersten Signals S₁ in ein zweites Signal S₂ eine monostabile Schaltung (3) umfaßt.

5. Schaltkreis nach einem der Ansprüche 1 bis 4, dadurch gekennzeichnet, daß er außerdem eine Einrichtung (4) zum Sicherstellen einer optischen Trennung zwischen der Einrichtung (2) zum Erzeugen des ersten Signals S₁ und der Einrichtung (3) zum Umwandeln des ersten Signals S₁ in das zweite Signal S₂ umfaßt.

6. Schaltkreis nach einem der Ansprüche 1 bis 5, dadurch gekennzeichnet, daß die Frequenz des ersten Signals S₁ zwischen einem unteren und oberen Wert jeweils einer minimalen Drehzahl und einer maximalen Drehzahl des Motors entsprechend variabel ist.

7. Schaltkreis nach einem der Ansprüche 1 bis 6, dadurch gekennzeichnet, daß die vorbestimmte Impulsdauer des zweiten Signals S₂ im wesentlichen gleich dem Inversen des oberen Werts der variablen Frequenz des ersten Signals S₁ ist.

8. Schaltkreis nach einem der Ansprüche 1 bis 7, dadurch gekennzeichnet, daß die Einrichtung (5) zum Versorgen des Motors (6) mit einer pulsierenden Spannung einen gesteuerten Leistungsunterbrecher (20) umfaßt, der einen ersten Steueranschluß (16) zum Empfangen des zweiten Signals S₂ umfaßt, einen zweiten Anschluß (22), der an eine Gleichspannungsquelle angeschlossen ist und einen dritten Anschluß (23), der an den Motor (6) angeschlossen ist.

9. Schaltkreis nach Anspruch 8, dadurch gekennzeichnet, daß die Einrichtung (5) zum Versorgen des Motors (6) mit einer pulsierenden Spannung außerdem ein LC Filter (24) umfaßt, das an den dritten Anschluß (23) des gesteuerten Leistungsunterbrechers (20) angeschlossen ist.

10. Schaltkreis nach einem der Ansprüche 1 bis 7, dadurch gekennzeichnet, daß die Einrichtung (5) zum Versorgen des Motors (6) mit einer pulsierenden Spannung umfaßt:
- einen ersten gesteuerten Leistungsunterbrecher (30), der einen ersten Steueranschluß (32) zum Empfangen des zweiten Signals S₂ hat, einen zweiten Anschluß (33), der an eine Gleichspannungsquelle angeschlossen ist, und einen dritten Anschluß (34), der an den Motor (6) angeschlossen ist; und
- einen zweiten gesteuerten Leistungsunterbrecher (31), der einen ersten Steueranschluß (35) zum Empfangen des zweiten Signals S₂ hat, einen zweiten Anschluß (36), der an den Motor (6) angeschlossen ist, und einen dritten Anschluß (37), der an eine Bezugspotentialleitung angeschlossen ist, wobei der zweite gesteuerte Leistungsunterbrecher (31) mit entgegengesetzter Phase in Bezug auf den ersten gesteuerten Leistungsunterbrecher (30) arbeitet.

11. Verfahren zum Steuern der Drehzahl eines elektrischen Gleichstrommotors, dadurch gekennzeichnet, daß es die Schritte umfaßt :
- Erzeugen eines ersten Signals S₁, das Impulse hat, die eine variable Frequenz entsprechend einer gewünschten Drehzahl des Motors (6) haben;
- Umwandeln des ersten Signals S₁ in ein zweites Signal S₂, das Impulse hat, die die Frequenz des ersten Signals und eine vorbestimmte konstante Dauer haben; und
- Versorgung des Motors (6) mit einer pulsierenden Spannung, die eine Frequenz und eine Impulsdauer hat, die im wesentlichen gleich der Frequenz und der Impulsdauer des zweiten Signals S₂ ist.

12. Verfahren nach Anspruch 11, dadurch gekennzeichnet, daß der Schritt zum Erzeugen eines ersten Signals S₁ den Schritt zum Erzeugen eines Ursprungssignals S₀ umfaßt, das Impulse hat, die eine konstante Frequenz und eine konstante Dauer haben, und den Schritt, die konstante Frequenz durch einen Teiler entsprechend einer gewünschten Drehzahl des Motors (6) zu teilen.

13. Verfahren nach Anspruch 11 oder 12, dadurch gekennzeichnet, daß die Frequenz des ersten Signals S₁ zwischen einem niedrigen und einem hohen Wert jeweils einer minimalen und einer maximalen Drehzahl des Motors (6) entsprechend variabel ist.

14. Verfahren nach Anspruch 13, dadurch gekennzeichnet, daß die festgelegte Dauer der Impulse des zweiten Signals S₂ im wesentlichen gleich dem Inversen des höchsten Werts der variablen Frequenz des ersten Signals S₁ ist.

## Claims

1. A circuit for controlling the rotation speed of an electric DC motor (6) characterized in that it comprises :
- means (2) for generating a first signal S1 consisting in pulses having a variable frequency corresponding to a desired rotation speed of the motor (6);
- means (3) for transforming the first signal S1 in a second signal S2 consisting in pulses having the frequency of the first signal S1 and a predetermined constant duration;
- means (5) for supplying the motor (6) with a pulsating voltage having a frequency and a pulse duration substantially equal to the frequency and the pulse duration of the second signal S2.

2. A circuit according to claim 1, characterized in that the means (2) for generating the first signal S1 comprises :
- means (10) for generating an original signal S0 consisting in pulses having a constant frequency and duration ; and
- means (13) for dividing the constant frequency by a divisor corresponding to a desired rotation speed of the motor (6).

3. A circuit according to claim 2, characterized in that the means for generating the initial signal S0 comprises an oscillator (10) for generating a square wave signal.

4. A circuit according to one of the claims 1 to 3, characterized in that the means for transforming the first signal S1 into the second signal S2 comprises a monostable circuit (3).

5. A circuit according to one of the claims 1 to 4, characterized in that it further comprises means (4) for providing opto-insulation between the means (2) for generating the first signal S1 and the means (3) for transforming the first signal S1 into the second signal S2.

6. A circuit according to one of the claims 1 to 5, characterized in that the frequency of the first signal S1 is variable between a lower value and an upper value corresponding respectively to a minimal speed and to a maximal speed of the motor (6).

7. A circuit according to one of the claims 1 to 6, characterized in that the predetermined duration of the pulses of the second signal S2 is substantially equal to the inverse of the upper value of the variable frequency of the first signal S1.

8. A circuit according to one of the claims 1 to 7, characterized in that the means (5) for supplying the motor (6) with a pulsating voltage comprises a controlled power switch (20) having a first control terminal (21) for receiving the second signal S2, a second terminal (22) connected to a DC voltage supply and a third terminal (23) connected to the motor (6).

9. A circuit according to claim 8, characterized in that the means (5) for supplying the motor (6) with a pulsating voltage further comprises an LC filter (24) connected to the third terminal (23) of the controlled power switch (20).

10. A circuit means according to one of the claims 1 to 7, characterized in that the means (5) for supplying the motor (6) with a pulsating voltage comprises :
- a first controlled power switch (30) having a first control terminal (32) for receiving the second signal S2, a second terminal (33) connected to a DC voltage supply and a third terminal (34) connected to the motor (6), and
- a second controlled power switch (31) having a first control terminal (35) for receiving the second signal S2, a second terminal (36) connected to the motor (6) and a third terminal (37) connected to a reference potential line, whereby the second controlled power switch (31) is operating in opposite phase with respect to the first controlled power switch (30).

11. A method for controlling the rotation speed of an electric DC motor (6) characterized in that it comprises the steps of:
- generating a first signal S1 consisting in pulses having a variable frequency corresponding to a desired rotation speed of the motor (6) ;
- transforming the first signal S1 in a second signal S2 consisting in pulses having the frequency of the first signal and a predetermined constant duration ;
- supplying the motor with a pulsating voltage having a frequency and a pulse duration substantially equal to the frequency and the pulse duration of the second signal S2.

12. A method according to claim 11, characterized in that the step of generating a first signal S1 comprises the step of generating an original signal S0 consisting in pulses having a constant frequency and a constant duration and the step of dividing the constant frequency by a divisor corresponding to a desired rotation speed of the motor (6).

13. A method according to one of the claims 11 or 12, characterized in that the frequency of the first signal S1 is variable between a lower value and an upper value corresponding respectively to a minimal speed and to a maximal speed of the motor (6).

14. A method according to claim 13, characterized in that the predetermined duration of the pulses of the second signal S2 is substantially equal to the inverse of the upper value of the variable frequency of the first signal S1.
